Europäisches Patentamt

European Patent Office

Office européen des brevets

(19)

(11) Numéro de publication: **0 312 434 B1**

## (12) FASCICULE DE BREVET EUROPEEN

(45) Date de publication de fascicule du brevet: **09.09.92**  (51) Int. Cl.⁵: **H04N 7/13**

(21) Numéro de dépôt: **88402552.9**

(22) Date de dépôt: **10.10.88**

(54) **Système de transmission d'image et de son.**

(30) Priorité: **12.10.87 FR 8714043**

(43) Date de publication de la demande:
**19.04.89 Bulletin 89/16**

(45) Mention de la délivrance du brevet:
**09.09.92 Bulletin 92/37**

(84) Etats contractants désignés:
**DE FR GB IT NL SE**

(56) Documents cités:
**DE-A- 2 453 441
DE-A- 2 835 366
FR-A- 2 023 244
FR-A- 2 345 872
US-A- 3 073 896**

**PHILIPS TECHNICAL REVIEW, vol. 36, no. 8, 1976, pages 233-241; H.P.J. BOUDEWIJNS et al.: "Digital circuits in the video telephone"**

**ELECTRICAL COMMUNICATION, vol. 51, no. 2, 1976, pages 100-105; H.J. KLUTZ et al.: "Test system for digital TV transmission"**

**PHILIPS TECHNICAL REVIEW, vol. 36, no. 4, 1976, pages 85-92; E.A. AAGAARD et al.: "An experimental video-telephone system"**

(73) Titulaire: **Guichard, Jacques
8/10 rue des Morillons
F-75015 Paris(FR)**

Titulaire: **EUDE, Gérard
26, allée Jean Bart
F-77200 Torcy(FR)**

(72) Inventeur: **Guichard, Jacques
8/10 rue des Morillons
F-75015 Paris(FR)**
Inventeur: **EUDE, Gérard
26, allée Jean Bart
F-77200 Torcy(FR)**

(74) Mandataire: **Mongrédien, André et al
c/o BREVATOME 25, rue de Ponthieu
F-75008 Paris(FR)**

PROCEEDINGS OF THE NATIONAL COMMU-
NICATIONS FORUM, vol. 39, 1985, pages
612-615, Oak Brook, Illinois, US; M.J. ZOLA:
"ISDN beyond 64 KBPS and its relation to
universal information services"

TECHNISCHE RUNDSCHAU, vol. 78, no. 51,
décembre 1986, pages 56-69, Bern, CH; F.
MAY: "Bildtelefon im digitalen Fernsprechnetz"

BRITISH TELECOMMUNICATIONS ENGINEE-
RING, vol. 4, partie 3, octobre 1985, pages
169-174, Londres, GB; N.D. KENYON:
"Audiovisual telecommunication services -
A unified approach"

IEEE GLOBAL TELECOMMUNICATIONS
CONFERENCE, Houston, TX, 1-4 décembre
1986, Conference Record, vol. 13, pages
251-255, IEEE; L. CHIARIGLIONE et al.:
"Integration prospects for an ISDN visual
telephone"

TN-NACHRICHTEN, no. 89, 1986, pages 56-62,
Francfort/Main, DE; W. MAUERSBERGER et
al.: "VISISTEL - Bildkommunikation für das
Fernmeldenetz der Zukunft"

PATENT ABSTRACTS OF JAPAN, vol. 8, no.
206 (E-267)[1643], 20 septembre 1984; & JP-
A-59 92 687 (NIPPON DENKI K.K.) 28-05-1984

## Description

La présente invention a pour objet un système de transmission d'image et de son. Elle trouve une application générale en transmission d'images et notamment en visiophonie, par exemple à 64 kbits/s.

Les progrès réalisés ces dernières années dans le domaine des composants électroniques et des processeurs de traitement de signal ont conduit à des techniques de réduction d'information (dites aussi de codage d'images) de plus en plus sophistiquées. Ces progrès laissent entrevoir la possibilité, dans un avenir proche, de réaliser un service de visiophonie à un débit aussi bas que 64 kbits/s.

Ces techniques, qui mettent en jeu diverses transformations (de Hadamard, de Haar, en cosinus, en sinus, etc.) sont décrites dans l'article de J. Guichard et D. Nasse intitulé "L'image numérique et le codage" publié dans la revue "L'écho des Recherches" n° 126, 4ème trimestre 1986, pp. 21-36.

On peut trouver également une description de ces techniques dans les demandes de brevets français n° 85 15 649 (FR-A-2 589 020 publiée le 24.04.87), 86 07 713 (FR-A-2 599 577 publiée le 04.12.87) et 86 05 213 (FR-A-2 597 282 publiée le 16.10.87).

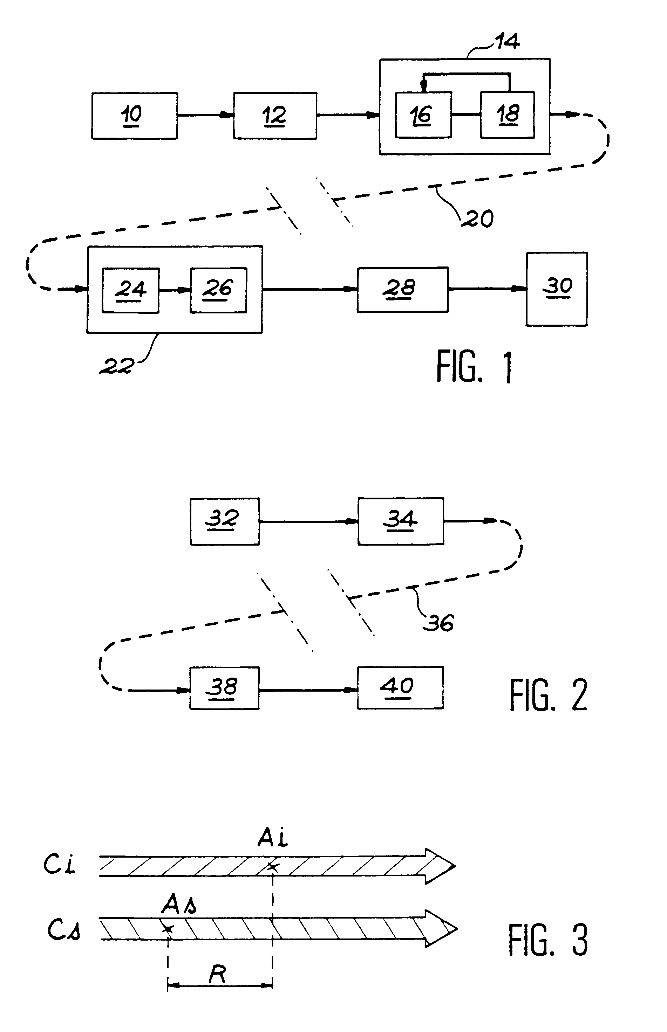

Les figures 1 à 5 illustrent la structure et le fonctionnement des systèmes de l'art antérieur.

La figure 1 représente un ensemble de traitement et de transmission d'image. Cet ensemble comprend :

- une voie d'émission constituée par un moyen 10 de prise d'images, une mémoire pré-tampon 12 (dite parfois "pré-buffer" cette mémoire étant écrite par un signal d'image à une certaine fréquence F et lue à une fréquence F/N, cette mémoire pré-tampon 12 délivrant un signal correspondant à une image sur N, un moyen de codage d'image 14 comprenant un codeur 16 et une mémoire tampon 18, ce moyen délivrant un signal numérique d'image codé,
- une ligne de transmission 20,
- une voie de réception constituée par un moyen de décodage 22 recevant le signal numérique d'image codé transmis, ce moyen comprenant un décodeur 24 et une mémoire tampon 26 et délivrant un signal d'image décodé à une fréquence F/N, un moyen 28 pour répéter N fois le signal d'image décodé et un moyen 30 d'affichage des images restituant des séquences de N images identiques.

La figure 2 illustre un ensemble de traitement du son. Cet ensemble comprend :

- une voie d'émission constituée par un moyen 32 de prise de son, un convertisseur analogique-numérique 34 délivrant un signal numérique de son,
- une ligne de transmission 36,
- une voie de réception constituée par un convertisseur numérique-analogique 38 et un moyen de restitution du son 40.

Les moyens 10, 12, 14 pour la voie image et 32, 34 pour la voie son constituent ce que l'on appellera un ensemble d'émission. Les moyens 22, 28 et 30 pour la voie image et 38, 40 pour la voie son constituent ce que l'on appellera un ensemble de réception.

Ces deux ensembles fonctionnent en parallèle et constituent deux canaux indépendants, ayant par exemple chacun un débit de 64 kbits/s. La figure 3 montre ainsi un canal image Ci et un canal son Cs, parallèles et identiques.

Le fonctionnement des moyens illustrés sur les figures 1 et 2 est illustré sur la figure 4. Cette figure comprend six diagrammes temporels.

Sur le diagramme a on voit un signal de balayage d'image en dents de scie. Ce signal est utilisé dans le moyen 10 : la partie A correspond au balayage par le spot de l'image et la partie B au retour du spot. Le premier balayage représenté correspond à une image notée Io. Dans l'exemple illustré, on s'intéressera aussi à la cinquième image notée I1, puis à la dixième I2, etc.

Le diagramme b représente le balayage de l'image à la sortie de la mémoire pré-tampon 12. Cette mémoire a été écrite par le signal d'image Io pendant un temps correspondant à une fréquence F et a été lue N fois plus lentement. Dans l'exemple illustré N = 5. En clair, on ne retient qu'une image sur N (donc ici une image sur 5). L'image ainsi "ralentie", notée I′o, est supposée divisée en trois parties d'égales durées, notées 1, 2 et 3.

Le diagramme c représente schématiquement la quantité moyenne de bits nécessaires pour coder l'image Io. On observera que, dans l'exemple illustré, le nombre de bits pour coder la partie centrale 2 est supérieur au nombre nécessaire pour coder les parties extrêmes 1 et 3, ce qui est généralement le cas avec les images visiophoniques puisque la zone centrale 2 correspond à la position de la tête de l'interlocuteur.

Le diagramme d représente les bits à la sortie de la mémoire 18 du moyen de codage 14. En moyenne, les signaux numériques des diagrammes c et d sont décalés d'une durée égale à la durée d'une image ralentie (I′o).

Les bits de l'image codée ayant été transmis, l'image est ensuite décodée, ce que représente le diagramme e où l'on retrouve, sur l'image ralentie restituée I″o les zones 1, 2 et 3.

Le diagramme f représente la restitution de l'image Io à son rythme normal. Dès avant la fin du signal représenté sur le diagramme e, on peut commencer à restituer l'image Io. A la fin du signal I"o la première image I"o a été reconstituée. Cette image peut ensuite être répétée N fois. Dans l'exemple illustré on répète cinq fois l'image I"'o.

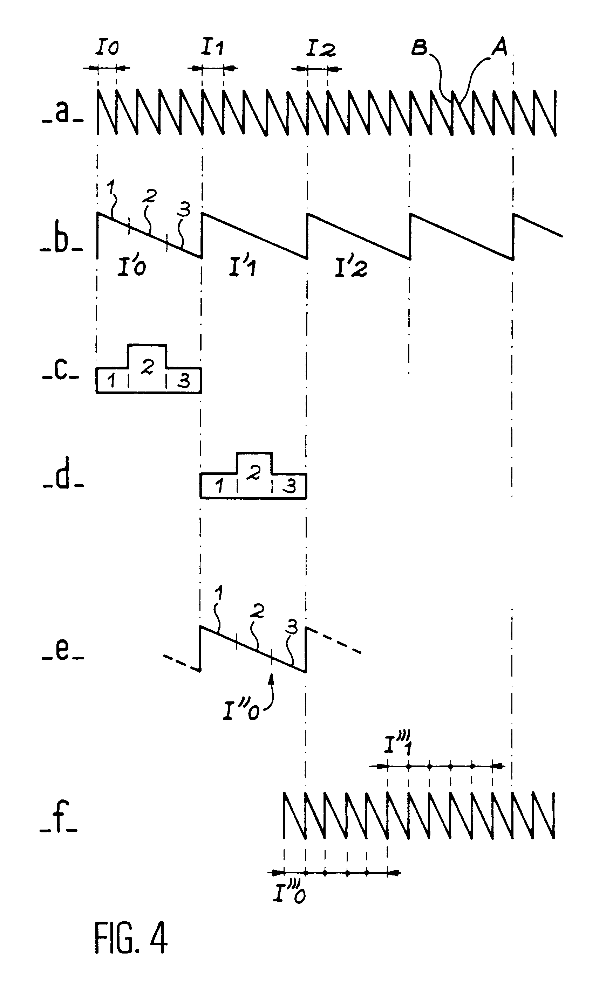

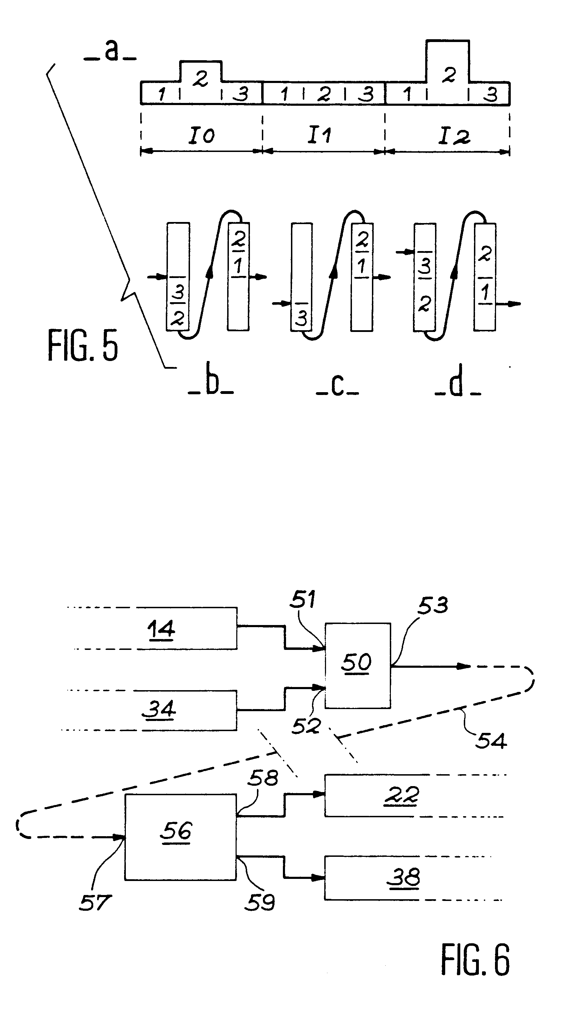

La quantité de bits produite pour transmettre chaque image dépend fortement du mouvement de celle-ci. Cependant les mécanismes de régulation sont tels que l'explication précédente reste valable en général. La figure 5 montre ainsi une suite de trois images (partie a) où l'image Io correspond à 3 zones, 1, 2, 3 comme sur l'exemple illustré figure 4, l'image I1 correspond à 3 zones d'égale quantité de bits et l'image I2 possède une zone centrale 2 à forte quantité de bits. Les schémas des parties b, c et d représentent la position des bits correspondant aux différentes zones 1, 2 et 3 de ces trois images différentes, dans la mémoire tampon.

Si l'on rapproche maintenant le diagramme f de la figure 4 du diagramme a de cette même figure, on observe que l'image Io restituée est en retard d'environ deux images codées sur l'image primitive Io. Par exemple, si le balayage de la prise d'image s'effectue à 50 Hz, l'image Io a une durée de 20 ms ; l'image ralentie I'o aura une durée de $5 \times 20 = 100$ms ; le retard entre l'image restituée et l'image primitive sera donc d'environ $2 \times 100 = 200$ms (très exactement 180 ms dans l'exemple illustré).

Si ce retard est sans importance lorsqu'il s'agit de ne transmettre que des images, il est, par contre gênant en visiophonie où la transmission d'image s'accompagne d'une transmission du son correspondant. Si l'on se reporte un instant à la figure 3, on notera qu'un mouvement des lèvres d'un interlocuteur produira un son As traité et transmis sans grand retard, mais que l'image Ai du visage de l'interlocuteur sera restituée avec un retard R. Ce décalage son-image est très gênant. C'est la raison pour laquelle on doit retarder le son d'autant pour restituer la simultanéité entre les événements visuel et sonore. Mais le caractère interactif de la visiophonie limite cet artifice, faute de quoi le retard introduit ferait perdre toute spontanéité au dialogue entre les deux interlocuteurs.

La présente invention a justement pour but de remédier à cet inconvénient. A cette fin, elle préconise de grouper le canal image et le canal son : au lieu de transmettre en parallèle l'image et le son, par exemple sur deux lignes de 64 kbits/s, il est plus avantageux de les transmettre séquentiellement, à un débit double, par exemple 128 kbits/s pour l'image, mais pendant seulement la moitié du temps, et 128 kbits/s pour le son pendant l'autre moitié du temps , une image codée étant transmise, puis le son de cette image.

Cette manière de procéder présente deux avantages :

- à condition que le codeur d'image fonctionne deux fois plus vite, quitte à rester inactif pendant la moitié du temps, le retard dû aux mémoires tampon se trouvera divisé par deux, et ceci avec des mémoires tampon qui auront conservé leur taille,

- le son, qui pour des raisons de synchronisation avec le mouvement des lèvres doit être retardé dans la technique classique, se trouvera automatiquement retardé lors de la mise en oeuvre de la présente invention.

De façon plus précise, la présente invention a pour objet un système de transmission d'image et de son du genre de ceux qui ont été décrits plus haut, ce système étant caractérisé par le fait que :

A) - dans l'ensemble d'émission :

a) la mémoire pré-tampon, le codeur et la mémoire tampon de la voie de traitement d'image ne travaillent que pendant une fraction $Ti/T$ du temps et $T/Ti$ fois plus vite que s'ils travaillaient en permanence, T étant la durée d'une image codée, cette voie délivrant un signal numérique de débit Di kbits/s et de durée Ti,

b) la voie de traitement de son ne délivre un signal numérique de son que pendant une fraction $Ts/T$ du temps avec un débit de Ds kbits/s,

c) est prévu en outre un multiplexeur à deux entrées reliées l'une à la sortie du moyen de codage de la voie de traitement d'image et l'autre à la sortie de la voie de traitement de son, ce multiplexeur ayant une sortie délivrant un signal constitué de séquences de période T, chaque séquence comprenant d'abord un signal d'image de durée Ti puis un signal de son de durée Ts, avec $T = Ti + Ts$,

B) - le moyen de transmission est constitué par une ligne de transmission unique reliée à la sortie du multiplexeur, cette ligne unique ayant un débit D égal à la somme des débits Di et Ds,

C) - dans l'ensemble de réception :

a) est prévu en outre un démultiplexeur à une entrée reliée à la ligne de transmission unique et deux sorties délivrant, la première un signal numérique d'image de durée Ti et de débit Di et la seconde un signal numérique de son de durée Ts et de débit Ds,

b) la voie de traitement d'image est reliée à la première sortie du démultiplexeur et son décodeur qui ne travaille que pendant une fraction $Ti/T$ du temps correspondant à la durée Ti du signal d'image,

c) la voie de traitement de son est reliée à la seconde sortie du démultiplexeur et à son décodeur qui ne travaille que pendant une fraction $Ts/T$ du temps, correspondant à la durée Ts du signal son.

De toute façon, les caractéristiques de l'invention apparaîtront mieux après la description qui va suivre d'exemples de réalisation donnés à titre explicatif et nullement limitatif. Cette description se réfère à des dessins annexés sur lesquels :

- la figure 1, déjà décrite, représente un ensemble de transmission d'image selon l'art antérieur,
- la figure 2, déjà décrite, représente un ensemble de transmission de son selon l'art antérieur,
- la figure 3, déjà décrite, montre deux canaux image et son,
- la figure 4, déjà décrite, montre des diagrammes temporels expliquant le fonctionnement des ensembles des figures 1 et 2,
- la figure 5, déjà décrite, montre l'état de la mémoire tampon selon les images traitées,
- la figure 6 illustre le principe du système de l'invention,

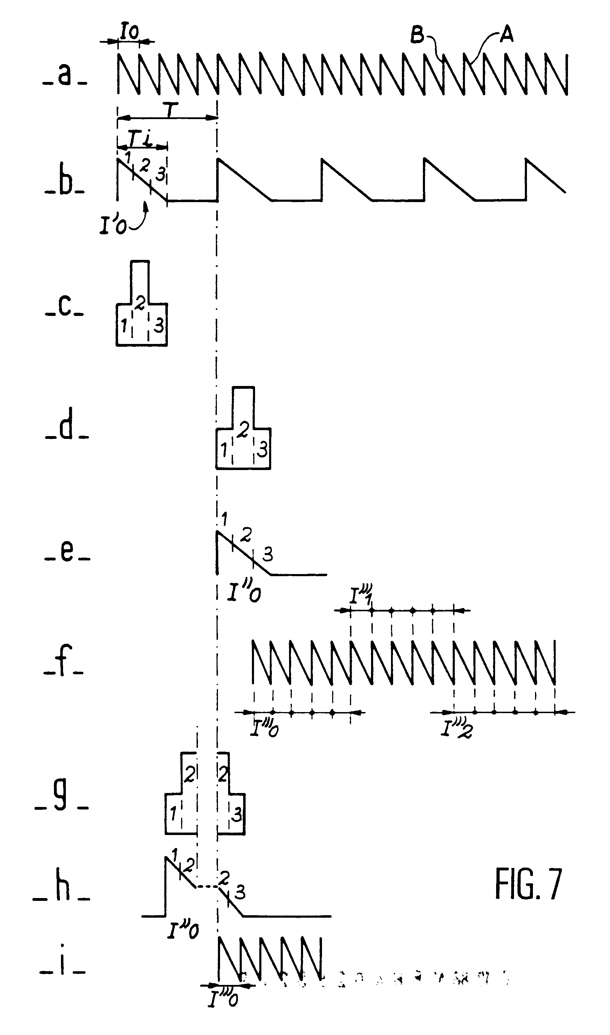

- la figure 7 montre des diagrammes temporels permettant d'expliquer le fonctionnement du système de l'invention,

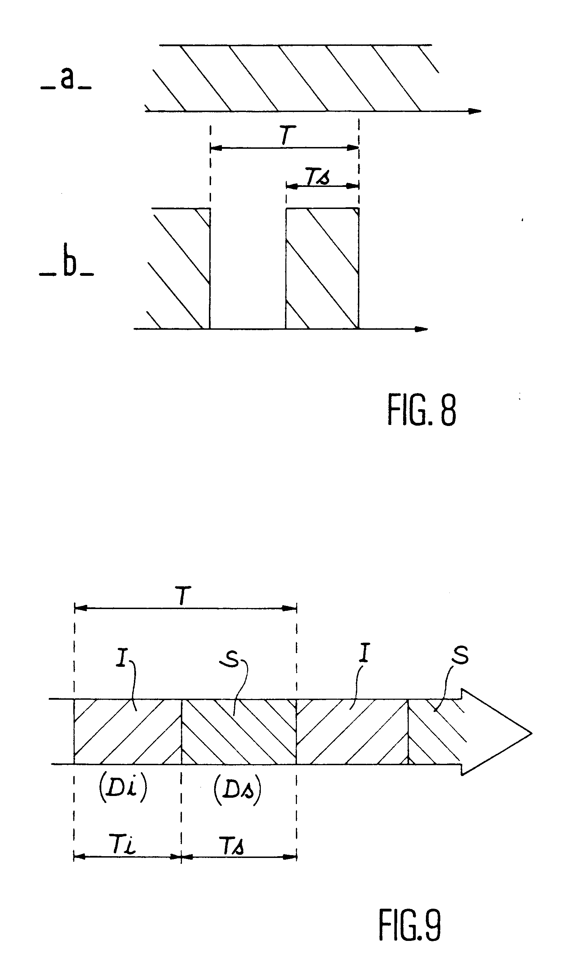

- la figure 8 illustre la structure du signal son,
- la figure 9 enfin, illustre un canal unique avec alternance de séquences image et son.

Le système représenté sur la figure 6 comprend, des moyens déjà représentés sur les figures 1 et 2, notamment un ensemble d'émission symboliquement représenté par le codeur d'image 14 et le codeur analogique-numérique de son 34.

Mais à la différence de l'art antérieur, le codeur d'image ne travaille que pendant une fraction Ti/T du temps (par exemple la moitié du temps) et T/Ti fois plus vite (par exemple deux fois plus vite) que s'il travaillait en permanence. Ce codeur délivre donc un signal numérique de débit Di kbits/s et de durée Ti, la durée T étant la durée d'une image codée.

De même, le codeur de son 34 ne délivre un signal numérique de son que pendant une fraction Ts/T du temps (par exemple la moitié du temps) avec un débit de Ds kbits/s qui est T/Ts fois plus important que la normale.

Le système représenté sur la figure 6 comprend encore un multiplexeur 50 à deux entrées 51, 52 reliées, l'une, 51, à la sortie du moyen de codage 14 de la voie de traitement d'image et l'autre, 52, à la sortie de la voie de traitement de son, ce multiplexeur 50 ayant une sortie 53 délivrant un signal constitué de séquences de période T, chaque séquence comprenant d'abord un signal d'image de durée Ti puis un signal de son de durée Ts, avec $T = Ti + Ts$.

Dans l'invention, le moyen de transmission des signaux d'image et de son est constitué par une ligne de transmission unique 54 reliée à la sortie 53 du multiplexeur 50, cette ligne unique ayant un débit D égal à la somme des débits Di et Ds.

Dans le système de l'invention, il est également prévu, avant l'ensemble de réception schématisé par le décodeur d'image 22 et le décodeur de son 38, un démultiplexeur 56 à une entrée 57 reliée à la ligne de transmission unique 54 et à deux sorties 58, 59. La première de ces sorties 58 délivre un signal numérique d'image de durée Ti et de débit Di et la seconde 59 un signal numérique de son de durée Ts et de débit Ds.

La voie de traitement d'image 22 est reliée à la première sortie 58 du démultiplexeur et à son décodeur qui ne travaille que pendant une fraction Ti/T du temps correspondant à la durée Ti du signal d'image.

La voie de traitement de son 38 est reliée à la seconde sortie 59 du démultiplexeur et à son décodeur, qui ne travaille que pendant une fraction Ts/T du temps, correspondant à la durée Ts du signal son.

Le fonctionnement de ce système est illustré par les diagrammes temporels de la figure 7. On retrouve, sur cette figure, les mêmes types de diagrammes que sur la figure 4, à savoir :

- un diagramme a qui représente le signal de balayage de l'image et montre la place de l'image primitive Io,
- un diagramme b qui représente l'image I'o "ralentie" mais qui, dans la présente invention, n'occupe qu'une partie Ti/T du temps (dans l'exemple illustré Ti/T = 1/2),
- un diagramme c qui montre la quantité de bits nécessaire à la description des trois zones 1, 2 et 3 de l'image I'o,
- un diagramme d qui montre les bits de codage,
- un diagramme e qui correspond à l'image I″o décodée,
- un diagramme f qui montre la restitution de l'image I‴o à son rythme normal et la répétition (en l'occurrence 5 fois),
- des diagrammes g, h et i qui seront évoqués plus bas.

Parallèlement à ce traitement sur l'image, le système de l'invention effectue un traitement sur le son, qui est illustré sur la figure 8. Sur la partie a on voit le signal numérique de son avec son débit normal et son caractère continu selon l'art antérieur. Dans l'invention, on comprime ce signal pendant une fraction Ts/T du temps, avec un débit accru Ds.

Finalement, le signal image de durée Ti et de débit Di et le signal son, de durée Ts et de débit Ds sont multiplexés sur un seul canal de transmission, ce qui est illustré sur la figure 9. On trouve ainsi une alternance de séquences image-son, où le son se trouve automatiquement retardé par rapport à l'image correspondante. Dans l'exemple illustré image et son sont transmis alternativement pendant la moitié du temps.

A la réception, l'image est reconstituée comme expliqué à propos de la figure 7. Le son, quant à lui, est rendu à nouveau continu par exemple par lecture d'une mémoire tampon dont la lecture est T/Ts fois plus lente que l'écriture.

En comparant le diagramme f de la figure 7 au diagramme f de la figure 4, on observe que le retard à la restitution de l'image I″o est diminué dans le cas de l'invention, ce qui va bien dans le sens d'une réduction de l'inconvénient souligné plus haut.

Ce retard peut encore être réduit si l'on s'y prend comme illustré sur les diagrammes g, h et i de la figure 7. En effet, dès que l'image I′o a été constituée (diagramme c) on peut commencer à reconstituer la première moitié de l'image I″o (diagramme g), car, comme évoqué à propos de la figure 2, la mémoire tampon du décodeur, lorsqu'il traite une image, contient déjà une partie de l'image suivante. On peut donc commencer le décodage de l'image suivante et le compléter après la reprise de la transmission des bits d'image (diagramme h). On obtient alors une première image I‴o encore plus tôt, et pratiquement avec un retard d'une image ralentie (soit T) sur l'image primitive Io (diagramme i).

Les exemples précédents correspondent au cas d'un débit de 64 kbits/s pour l'image et de 64 kbits/s pour le son (Ti = Ts = T/2 et Di = Ds). Mais l'invention peut s'appliquer à tout autre cas, comme par exemple 96 kbits/s pour l'image et 32 kbits/s pour le son. Elle est également applicable dans le cas où l'on ne dispose que d'une seule voie à 64 kbits/s avec 48 kbits/s pour l'image et 16 kbits/s pour le son par exemple.

Le problème du retard entre son et image que l'on rencontre avec une transmission à bas débit telle que 64 kbits/s est donc résolu par le système qui vient d'être décrit et qui propose un multiplexage son et image, (une image codée, le son correspondant) ayant des débits sensiblement identiques (64kbits/s / 64kbits/s ; 96kbits/s / 32kbits/s ; 48kbits/s / 16kbits/s).

**Revendications**

1. Système de transmission d'image et de son comprenant :
   A) - un ensemble d'émission constitué par :
   a) une voie de traitement d'image comprenant un moyen de prise d'images (10), une mémoire pré-tampon (12) écrite par un signal d'image à une certaine fréquence F et lue à une fréquence F/N, cette mémoire pré-tampon (12) délivrant un signal correspondant à une image sur N, un moyen de codage d'image (14) comprenant un codeur (16) et une mémoire tampon (18), ce moyen délivrant un signal numérique d'image codé,
   b) une voie de traitement de son, comprenant un moyen de prise de son (32); un convertisseur analogique-numérique (34) délivrant un signal numérique de son
   B) - un moyen (20, 36) de transmission du signal numérique d'image et du signal numérique de son,
   C) - un ensemble de réception constitué par :
   a) une voie de traitement d'image comprenant un moyen de décodage (22) recevant le signal numérique d'image codé transmis, ce moyen comprenant un décodeur (24) et une mémoire tampon (26) et délivrant un signal d'image décodé à une fréquence F/N, un moyen (28) pour répéter N fois le signal d'image décodé et un moyen (30) d'affichage des images restituant des séquences de N images identiques,
   b) une voie de traitement de son comprenant un convertisseur numérique-analogique (38) et un moyen de restitution du son (40),
   ce système étant caractérisé par le fait que :
   A) - dans l'ensemble d'émission :
   a) la mémoire pré-tampon (12), le codeur (16) et la mémoire tampon (18) de la voie de traitement d'image ne travaillent que pendant une fraction Ti/T du temps et T/Ti fois plus vite que s'ils travaillaient en permanence, T étant la durée d'une image codée, cette voie délivrant un signal numérique de débit Di kbits/s et de durée Ti,
   b) la voie de traitement de son (34) ne délivre un signal numérique de son que pendant une fraction Ts/T du temps avec un débit de Ds kbits/s,
   c) est prévu en outre un multiplexeur (50) à deux entrées (51, 52) reliées, l'une (51), à la sortie du moyen de codage (14) de la voie de traitement d'image et l'autre (52) à la sortie de la voie de traitement de son (34), ce multiplexeur (50) ayant une sortie (53) délivrant un signal constitué de séquences de période T, chaque séquence comprenant d'abord un signal d'image de durée Ti puis un signal de son de durée Ts, avec T = Ti + Ts,
   B) - le moyen de transmission est constitué par une ligne de transmission unique (54) reliée à la sortie (53) du multiplexeur (50), cette ligne unique (54) ayant un débit D égal à la somme des débits Di et Ds,

C) - dans l'ensemble de réception :

a) est prévu en outre un démultiplexeur (56) à une entrée (57) reliée à la ligne de transmission unique (54) et à deux sorties (58, 59) délivrant, la première (58) un signal numérique d'image de durée Ti et de débit Di et la seconde (59) un signal numérique de son de durée Ts et de débit Ds,

b) la voie de traitement d'image (22) est reliée à la première sortie (58) du démultiplexeur (56) et à son décodeur qui ne travaille que pendant une fraction Ti/T du temps correspondant à la durée Ti du signal d'image,

c) la voie de traitement de son (38) est reliée à la seconde sortie (59) du démultiplexeur (50) et à son décodeur qui ne travaille que pendant une fraction TS/T du temps, correspondant à la durée Ts du signal son.

2. Système selon la revendication 1, caractérisé par le fait que les deux débits Di et Ds sont égaux, la ligne unique de transmission (54) ayant un débit égal au double de ces débits.

3. Système selon la revendication 2, caractérisé par le fait que Di = Ds = 64 kbits/s, la ligne unique de transmission (54) ayant un débit égal à 128 kbits/s.

4. Système selon la revendication 1, caractérisé par le fait que le débit Di est supérieur au débit Ds.

5. Système selon la revendication 4, caractérisé par le fait que Di = 96 kbits/s et Ds = 32 kbits/s, la ligne unique de transmission (54) ayant un débit de 128 kbits/s.

6. Système selon la revendication 4, caractérisé par le fait que Di = 48 kbits/s et Ds = 16 kbits/s, la ligne unique de transmission (54) ayant un débit de 64 kbits/s.

**Claims**

1. Image and sound transmission system comprising:

A) - a transmission system made up of:

a) a transmission unit made up of a device (10) for capturing images, a pre-buffer memory (12), which is written upon with a picture signal at a certain frequency (F), read at a frequency (F/N), and emits a signal corresponding to a picture on (N), an image coding device (14) which includes an encoder (16) and a buffer memory (18), and this device emits an encoded digital picture signal,

b) a transmission unit made up of a sound input device (32), an analog-digital converter (34) which emits a digital sound signal:

B) - a device (20, 36) for the transmission of the digital picture signal and the digital sound signal:

C) - a receiving unit made up of:

a) an image processing unit comprising a decoding device (22) which receives the encoded digital signal transmitted and includes a decoder (24) and a buffer memory (26), and emits a decoded picture signal at a frequency (F/N), a device (28) for retransmitting the decoded picture signal N times, and a picture display medium (30) which reconstructs the sequences of N identical images,

b) a sound processing unit which includes a digital-analog converter (38) and a sound restitution device (40),

said system being characterized in that:

A) - in the transmission system:

a) the pre-buffer memory (1), the encoder (16) and the buffer memory (18) of the image processing unit operate only during a fraction (Ti/T) of the (total operating) time and T/Ti times faster than if they operated continuously, T being the length of an encoded image, with this unit emitting a digital signal with an output of Di kbits/s and with a length of Ti,

b) the sound processing unit (34) only emits a digital sound signal during a fraction (Ts/T) of the time, with an output of Ds kbits/s,

c) there is in addition a multiplexer (50) with two inputs, one (51) connected to the output of the coding device (14) of the image processing unit and the other (52) to the output of the sound processing unit (34), this multiplexer (50) having an output (53) which emits a signal made up of sequences with the time interval (T) each sequence having first a picture signal with a length of Ti then a sound signal with a length of Ts with T-Ti + Ts;

B) - the transmission unit is made up of a single transmission line (54) connected to the output (53) of the multiplexer (50), this single line (54) having an output (D) equal to the sum of the outputs (Di and Ds);

C) - in its receiving unit:

a) there is also a demultiplexer (56) with an input (57) connected to the single transmission line (54) and to two outputs (58, 59), the first (58) of which emits a digital picture image with a length of Ti and an output of Di, and the second (59) of which emits a digital sound signal with a length of Ts and an output of Ds,

b) the image processing unit (22) is connected to the first output (58) of the demultiplexer (56) and to its decoder, which only operates during a fraction (Ti/T) of the duration Ti of the picture signal,

c) the sound processing unit (38) is connected to the second output (59) of the demultiplexer (50) and to its decoder, which only operates during a fraction Ts/T of the time corresponding to the duration Ts of the sound signal.

2. System in accordance with claim 1, characterized in that the two outputs Di and Ds are equal and the single transmission line (54) has an output equal to twice these outputs.

3. System in accordance with claim 2, characterized in that Di-Ds-64 kbits/s with the single transmission line (54) having an output equal to 128 kbits/s.

4. System in accordance with claim 1, characterized in that the Di output is greater than the Ds output.

5. System in accordance with claim 4, characterized in that Di-96 kbits/s and Ds-/32 kbits/s with the single transmission line (54) having an output of 128 kbits/s.

6. System in accordance with claim 4, characterized in that Di-48 kbits/s and Ds-16 kbits/s with the single transmission line (54) having an output of 64 kbits/s.

**Patentansprüche**

1. Übertragungssystem für Bild und Ton mit:

A) - einer Sendeanordnung, die besteht aus:

a) einer Bildbearbeitungsspur mit einer Bildaufnahmevorrichtung (10), einem Vorpufferspeicher (12), der von einem Bildsignal mit einer bestimmten Frequenz F beschrieben wird und mit einer Frequenz F/N ausgelesen wird, wobei dieser Vorpufferspeicher (12) ein Signal liefert, das einem Bild auf N entspricht, einer Bildcodierungsvorrichtung (14) mit einem Codierer (16) und einem Pufferspeicher (18), wobei diese Vorrichtung ein digitales Signal des codierten Bildes erzeugt,

b) einer Tonbearbeitungsspur mit einer Vorrichtung zur Tonaufnahme (32); einem Analog/Digitalwandler (34), der ein digitales Tonsignal erzeugt,

B) - einer Sendevorrichtung (20, 36) für das digitale Bildsignal und das digitale Tonsignal,

C) - einer Empfangsanordnung, die besteht aus:

a) einer Bildbearbeitungsspur mit einer Decodiervorrichtung (22), die das gesendete, codierte digitale Bildsignal empfängt, wobei diese Vorrichtung einen Decodierer (24) und einem Pufferspeicher (26) umfaßt und ein decodiertes Bildsignal mit einer Frequenz F/N erzeugt, einer Vorrichtung (28) zum N-maligen Wiederholen des codierten Bildsignals und einer Anzeigevorrichtung für Bilder, die Folgen von N identischen Bildern wiederherstellt,

b) einer Tonbearbeitungsspur mit einem Digital/Analogwandler (38) und einer Tonwiederherstellungsvorrichtung (40),

wobei dieses System gekennzeichnet ist durch die Tatsache, daß:

A) - in der Sendeanordnung:

a) der Vorpufferspeicher (12), der Codierer (16) und der Pufferspeicher (18) der Bildbearbeitungsspur nur während eines Bruchteils Ti/T der Zeit und T/Ti mal schneller arbeiten als sie permanent arbeiten würden, wobei T die Dauer eines codierten Bildes ist, wobei diese Spur ein digitales Signal mit einem Durchsatz von Di kbits/s von der Dauer Ti erzeugt,

b) die Tonbearbeitungsspur (34) nur während eines Bruchteils Ts/T der Zeit ein digitales Tonsignal mit einem Durchsatz von Ds kbits/s erzeugt,

c) außerdem ein Multiplexer (50) mit zwei Eingängen (51, 52) vorgesehen ist, von denen einer (50) mit dem Ausgang der Codierungsvorrichtung (14) der Tonbearbeitungsspur (34) verbunden ist, wobei dieser Multiplexer (50) einen Ausgang (53) besitzt, der ein Signal erzeugt, das aus Sequenzen der Periode T besteht, wobei jede Sequenz zunächst ein Bildsignal der Dauer Ti und dann ein Tonsignal der Dauer Ts umfaßt, mit T = Ti + Ts,

B) - die Sendevorrichtung aus einer einzigen Sendeleitung (54) besteht, die mit dem Ausgang (53) des Multiplexers (50) verbunden ist, wobei diese einzige Leitung (54) einen Durchsatz D gleich der Summe der Durchsätze Di und Ds besitzt,

C) - in der Empfangsvorrichtung:

a) weiterhin ein Demultiplexer (56) mit einem Eingang (57), der mit der einzigen Sendeleitung (54) verbunden ist, und zwei Ausgängen (58, 59) vorgesehen ist, von denen der erste (58) ein digitales Bildsignal der Dauer Ti mit dem Durchsatz Di und der zweite (59) ein digitales Tonsignal der Dauer Ts mit dem Durchsatz Ts erzeugt,

b) die Bildbearbeitungsspur (22) mit dem ersten Ausgang (58) des Demultiplexers (56) und mit seinem Decodierer verbunden ist, der nur während eines Bruchteils Ti/T der Zeit entsprechend der Dauer Ti eines Bildsignals arbeitet,

c) die Tonbearbeitungsspur (38) mit dem zweiten Ausgang (59) des Demultiplexers (50) und mit seinem Decodierer verbunden ist, der nur während eines Bruchteils Ts/T der Zeit entsprechend der Dauer Ts eines Tonsignals arbeitet.

2. System nach Anspruch 1, gekennzeichnet durch die Tatsache, daß die beiden Durchsätze Di und Ds gleich sind, wobei die einzige Sendeleitung (54) einen Durchsatz gleich dem doppelten dieser beiden Durchsätze besitzt.

3. System nach Anspruch 2, gekennzeichnet durch die Tatsache, daß Di = Ds = 64 kbits/s, wobei die einzige Leitung (54) einen Durchsatz gleich 128 kbits/s besitzt.

4. System nach Anspruch 1, gekennzeichnet durch die Tatsache, daß der Durchsatz Di größer ist als der Durchsatz Ds.

5. System nach Anspruch 4, gekennzeichnet durch die Tatsache, daß Di = 96 kbits/s und Ds = 32 kbits/s, wobei die einzige Leitung (54) einen Durchsatz gleich 128 kbits/s besitzt.

6. System nach Anspruch 4, gekennzeichnet durch die Tatsache, daß Di = 48 kbits/s und Ds = 16 kbits/s, wobei die einzige Leitung (54) einen Durchsatz gleich 64 kbits/s besitzt.

FIG. 1

FIG. 2

FIG. 3

FIG. 4

FIG. 5

FIG. 6

FIG. 7

_a_

_b_

$T$

$Ts$

FIG. 8

$T$

$I$

$S$

$I$

$S$

$(Di)$

$(Ds)$

$Ti$

$Ts$

FIG.9